# EUROPEAN PATENT APPLICATION

(11) **EP 4 779 537 A1**
(43) Date of publication of application: **22.07.2026**
(21) Application number: 25152254.6
(22) Date of filing: 16.01.2025
(51) Int. Cl.: G06Q 10/04, G06Q 10/0631, G06Q 30/0283, G06Q 50/04

(54) **COMPUTER-IMPLEMENTED METHOD AND CORRESPONDING SYSTEM FOR PREDICTING REQUIRED RESOURCES DURING USAGE OF FUNCTION UNITS OR LOW-VOLUME PRODUCTION OF A PRODUCT**

(71) Applicant: Siemens Aktiengesellschaft, 80333 München (DE)
(72) Inventor: Hegazy, Shady, 91052 Erlangen (DE); Höfig, Kai, 83101 Rohrdorf (DE); Körner, Christian, 83346 Bergen (DE)
(74) Representative: Siemens Patent Attorneys

(57) **Abstract**

The invention relates to a computer-implemented method and corresponding system for predicting required resources during usage of function units or low-volume production of a product. The method comprises the following steps:
a) deriving at least one request for usage of a function or for production of a product of a pre-determined product type from monitored user interaction via a user interface (API1; API2)
b) tracing at least one former production process of a product or former usage of a function each of the same or similar type as the type of the requested one in order to determine resources required for the product production or function usage;
c) forming samples from the determined resources, whereby a machine learning algorithm is trained by the formed samples;
d) predicting/forecasting, by the trained learning algorithm, the required resources for production or usage of the requested product or requested function;
e) presenting, via the user interface, a quote of charge calculated from a first value representing the required resources for the former production process or for the former usage and from a second value representing the required resources of the prediction depending on the lower value of both values.

## Description

The invention relates to a computer-implemented method and corresponding system for predicting required resources during usage of function units or low-volume production of a product.

### BACKGROUND OF THE INVENTION

A distributed ecosystem usually consists of multiple elements that can be distributed over different locations, countries or areas of property. Some elements produce goods of any kind, physical or digital. Some other elements provide a computing service in a cloud. Some other elements are responsible to allow inputs from a client. The purpose of such a system is to automate the process from user input, e.g. a client order, over production and/or computing, delivery and charging the client for the service. To do so, the production ecosystem provides an electronic interface to the customer, ideally with no human interaction required from the producer/provider. In this context this interface is referenced as the API (application programming interface). The API of the production/cloud interface is either used manually by taking human inputs, e.g. using a web or client-based application or is directly addressed by the automation system of a client. If, for example, a machine of a client requires some goods. This machine can communicate with the ecosystem using the API and trigger the production of the required goods at the producers site or initiate computing in a cloud.

Based upon either specifications in the case of production units or based upon execution models such as source code in the case of cloud computing units as input, resource consumption of the units is needed to make transparent to the user. The user can be a costumer who order goods which need to be produced or a producer who uses cloud computing e.g. for planning/ steering /controlling production lines and schedules. The consumed resources can be energy consumption, duration of execution, CO2 footprint or consumed material.

Depending on consumed resources the user may take his/her decisions concerning the production and/or computing location (e.g. where energy costs and CO2 footprint is low).

The user also takes decisions for ordering good and/or using computing services depending on the price model which is usually calculated form to resource consumption and/or bill of material.

In view of this, the objective is to develop an efficient and reliable assistance system suitable for generating acceptance tests with as many automated processing steps as possible. In a production environment usually prices for the usage of a production unit are fix. In cloud computing and e.g. for additive manufacturing time-based price models are often used.

In an environment of a highly individually customized product that is only produced in a low amount/volume of several units or even produced only once, pricing for such an individual product is a complex. The resource prices for the production units may vary over time. Energy prices, prices of material being processed or labor costs may not fix but change over time.

The required resources such as energy, human work, material or computational power might be even unknown or impossible to foresee when a customer configures such a product. In such systems, the customer needs to be charged for the requested value and he/she also needs to know the final resource consumption, which leads also to a price, before placing an order.

It is an objective of the invention to provide a method and/or system that assists customers in their decisions before placing an order in the case of production units and/or in the case of cloud computing units to be used.

### SUMMARY OF THE INVENTION

The above-mentioned objective is achieved by a method and one or more apparatus and/or a system and/or a device according to the features of the independent claims.

Preferred embodiments of the invention are described in the dependent claims. Any combination of the features of the dependent claims to each other and with the features of the independent claims is possible.

An aspect of the invention is a computer-implemented method for predicting required resources during execution of at least one function in a computing unit or low-volume production of a product comprising the following method steps:
a) deriving at least one request for usage of a function or for production of a product of a pre-determined product type from monitored user interaction via a user interface;
b) tracing at least one former production process of a product or former usage of a function each of the same or similar type as the type of the requested one in order to determine resources required for the product production or function usage;
c) forming samples from the determined resources, whereby a machine learning algorithm is trained by the formed samples;
d) predicting/forecasting, by the trained learning algorithm, the required resources for production or usage of the requested product or requested function;
e) presenting, via the user interface, a quote of charge calculated from a first value representing the required resources for the former production process or for the former usage and from a second value representing the required resources of the prediction depending on the lower value of both values.

A manufacturing specification of the said product based on the at least one request of production can be acquired. Manufacturing can be 3D printing or textile layering.

A plant to manufacture the product can be operated according to the manufacturing specification if the calculated quote of charge is acknowledged e.g. via user interaction.

The end-product can be a technical object like a vehicle, a vessel or an aircraft.

If a source code of the said function based on the at least one request is acquired, then source code can be executed via a cloud computing unit to provide the function if the calculated quote of charge is acknowledged e.g. via user interaction.

The function can be a function in the manufacturing/production process.

Especially for rarely produced goods or for rarely used functions. The inventive solution ensures that the consumption for the required resources during production does not exceed a threshold of maximum amount of resource consumption and covers the costs for which the customer is charged.

A further aspect of the invention is a (technical) system/an apparatus at least one processor which is configured to perform the above mentioned computer implemented method and its embodiments.

The processor can steer and/or control and/or load and/or execute method steps of the above mentioned method. The processor can be part of a server or of a runtime environment within the multi-user system.

Embodiments as described above for the method can be analogously applied for the system and for computer program (product) and for a computer-readable storage and/ provisioning medium.

Systems can be implemented by hardware, firmware and/or software modules or a combination of them.

The computer-readable storage medium stores instructions executable by one or more processors of a computer, wherein execution of the instructions causes the computer system to perform the method. The one or more processors can be distributed organized on servers or in a cloud.

The computer program (product) is executed by one or more processors of a computer and performs the method.

### BRIEF DESCRIPTION OF THE SEVERAL VIEWS OF THE DRAWINGS

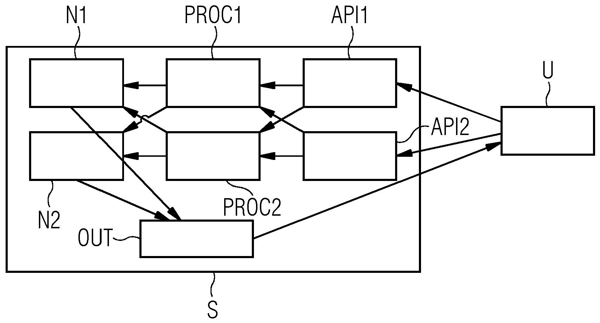

The foregoing and other aspects of the present invention are best understood from the following detailed description when read in connection with the accompanying drawings. For the purpose of illustrating the invention, embodiments that are presently preferred are shown in the drawings , it being understood, however, that the invention is not limited to the specific instrumentalities disclosed. In the figures, identical or functionally identical elements are denoted by identical reference signs. Included in the drawings are the following figures:
The figure shows modules/components/elements of the inventive system and its environment.

### Detailed description of preferred examples/embodiments

The figure shows modules/components/elements of the inventive system and its environment. In this example the inventive technical system S records the API calls e.g. from API1, API2 and traces the entire production process of a good until delivery to the customer U. A prediction model, such as an artificial neural network (Al), can be trained to predict resource usage based on the requirements provided by the customer over the API.

According to the figure there are two production nodes N1, N2 to produces a good. N1 and N2 could be also cloud nodes to provide processing for an ordered service. Each node is connected to a processing element PROC1, PROC2 and vice versa. Each processing element is connected to an API an vice versa.

At least one request for usage of a function or for production of a product of a pre-determined product type is derived from monitored user U interaction via a user interface API1 and/or API2. API calls from a customer are traced throughout the processing elements comprising internal processing logic to the production node and the output management component OUT that can contain the not shown prediction model. Each element that is involved in the processing of a request consumes resources such as energy, labor resources or material. The API call itself and the subsequent function calls during the execution of the request are being combined with the resources that each unit uses during the execution of a request. That means former production process of a product or former usage of a function each of the same or similar type are traced to determine resource consumption. This generates samples for the training of the machine learning algorithm of the AI that enables to predict resource consumption required for the product production or function usage currently requested from the customer. The prediction model learns over time the resource consumption for different API calls. Depending on the predicted resource consumption it anticipates the costs that arise during the processing of the request.

This cost anticipation representing the resource usage prediction is based on the provided customer requirements and is provided to the customer beforehand of the execution of a request e.g. as a quote. On the user interface a quote of charge is presented which is calculated from a first value representing the required resources for the former production process or for the former usage and from a second value representing the required resources of the prediction depending on the lower value of both values.

If the customer agrees upon that quote, the costs are being calculated during the execution of the request and if the calculated value is smaller than the predicted value, the calculated value is taken as the base for charging the customer. If the calculated value is higher than the prediction, the prediction can be the basis for the API call from the customer in order to ensure a reliable prediction to the customer regarding the cost of the producer. The system S constantly generates new samples to retrain the prediction model.

The prediction model becomes an adaptive. It can also integrate changes to the system. During the training of then prediction model, the resources that are consumed during production can be included and the model will learn to react on changes of the production system, e.g. when new machinery is being included.

For afore mentioned situation with changing machinery, sub models can only predict prices for a certain resource which should be included in the price estimations. So machinery can be in a competition against each other to produce with lowest usage of resources.

During training of the prediction model prices of rare materials can be included as an input and the current prices are provided as an input together with the customer requirements. Prices usually represent the availability of raw material and/or the quality of the material. So the technical effect is how fast a good can be produced (availability of the material) and delivered as well as quality of the produced product also depends on the quality of the material.

The prediction model is able to predict the prices for a good by considering the current price situation for required goods if price situation changes.

If a customer orders many products, the prediction algorithm can include scaling effects into the price prediction. The prediction model can be also trained with threshold, i.e. the maximum amount the customer can be charged.

The following use cases are applicable according to the inventive system/method:
• Resource consumption of the units is traced. Besides production units source code for execution can be input in the case of cloud computing units. The consumed resources in the cloud can be energy consumption, duration of execution, CO2 footprint or consumed material. Tracing data can be used to build a database of (training) samples. Such data is fed into a machine learning-based algorithm to train a prediction model. Using this prediction model for each node of a production eg. N1, N2 or for each cloud network node, the execution costs in terms of consumed resources can be predicted for an entire line of execution using multiple units. Since producing a unit or executing a function in a cloud unit the prediction model enables the unit to find the resource optimal path to produce a good over multiple production units/nodes or to execute a function in cloud nodes from end to end. The specification contains a precise description of a product or a function. From this description, in the case of a product, the consumed resources such as used material, is fed into the learning algorithm.
• In the case of 3D printing, the consumed material is energy and print material, that takes a certain time to print, is traced together with the printing output. These form samples that can be used to train the machine learning model for a specific 3D printing-based production unit/part for a product. If certain parts of a product can be produced by 3D printing, resource consumption is predicted. The specification document is evaluated for that specific printing unit and the resource consumption on this unit is predicted. This analysis is compared with other options, for example classic production. The optimal selection of production units is selected based on optimal resource consumption.
• The main resource of a technical textile layering machine is the layer material, duration of the production process, finished material and energy consumption. These ones are also traced, and the model learns to predict consumed resources for textile layering that haven't been produced on the machine before.

The outcome of such manufacturing/computing whose specification or source code can be acquired can be a vehicle, vessel or an aircraft or other technical objects.

The invention has been described in detail with reference to embodiments thereof and examples. Variations and modifications are possible. Instead of the above-described production process one or more processes can analogously be applied to other technical systems.

The multi user system and its parts can be (computer-) implemented for performing the inventive method steps.

Parts of the system can be integrated into a (computer) cloud system. It includes one or more processors and can be coupled with data, where said processor(s) is/are configured to execute the method steps.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the systems and/or computer and/or another processor may be configured to implement the acts described herein.

The above-described method may be implemented via a computer program (product) including one or more computer-readable storage media having stored thereon instructions executable by one or more processors of a computing system and/or computing engine. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

In addition, and alternatively, it is possible that a control device receives other computer-readable control signals in order to initiate the mentioned steering/control process by its processor(s).

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting, and that it be understood that all equivalents and/or combinations of embodiments are intended to be included in this description.

## Claims

1. A computer-implemented method for predicting required resources during execution of at least one function in a computing unit or low-volume production of a product comprising the following method steps:
f) deriving at least one request for usage of a function or for production of a product of a pre-determined product type from monitored user interaction via a user interface (API1; API2)
g) tracing at least one former production process of a product or former usage of a function each of the same or similar type as the type of the requested one in order to determine resources required for the product production or function usage;
h) forming samples from the determined resources, whereby a machine learning algorithm is trained by the formed samples;
i) predicting/forecasting, by the trained learning algorithm, the required resources for production or usage of the requested product or requested function;
j) presenting, via the user interface, a quote of charge calculated from a first value representing the required resources for the former production process or for the former usage and from a second value representing the required resources of the prediction depending on the lower value of both values.

2. Method of the previous claim, further comprising:
- acquiring a manufacturing specification of the said product based on the at least one request of production,
- operating a plant to manufacture the product according to the manufacturing specification if the calculated quote of charge is acknowledged.

3. Method of any one of preceding claims,
wherein the product is a technical object like a vehicle, a vessel or an aircraft.

4. Method of the previous claim 1, further comprising:
- acquiring a source code of the said function based on the at least one request,
- executing the source code via a cloud computing unit to provide the function if the calculated quote of charge is acknowledged.

5. System (S) comprising at least one processor which is configured to perform a method according to any of the preceding method claims.

6. A computer program comprising instructions which, when the program is executed by a computer, cause the computer to carry out a method according to any of the preceding method claims.

7. A provisioning device for the computer program according to the previous claim, wherein the provisioning device stores and/or provides the computer program product.
